# EUROPEAN PATENT APPLICATION

(11) **EP 2 477 436 A1**
(43) Date of publication of application: **18.07.2012**
(21) Application number: 10815356.0
(22) Date of filing: 07.09.2010
(51) Int. Cl.: H04W 28/04, H04W 28/06

(54) **RADIO BASE STATION AND MOBILE COMMUNICATION METHOD**

(30) Priority: 08.09.2009 JP 2009207489
(71) Applicant: NTT DoCoMo, Inc., Tokyo 100-6150 (JP)
(72) Inventor: KIYOSHIMA, Kohei, Tokyo 100-6150 (JP); ISHII, Hiroyuki, Tokyo 100-6150 (JP); UMESH, Anil, Tokyo 100-6150 (JP); OKUBO, Naoto, Tokyo 100-6150 (JP)
(74) Representative: HOFFMANN EITLE
(86) International application number: PCT/JP2010/065331
(87) International publication number: WO 2011/030759

(57) **Abstract**

A radio base station eNB according to the present invention includes: a transmission format determination unit 13 configured to determine a transmission format of an uplink data signal where HARQ is performed; a frequency resource determination unit 14 configured to determine a frequency resource of the uplink data signal; a transmission instruction unit 15 configured to instruct new transmission and retransmission of the uplink data signal via PDCCH; and a transmission acknowledgement information transmission unit 12 configured to transmit transmission acknowledgement information of the uplink data signal, via PHICH, wherein the transmission acknowledgement information transmission unit 12 always transmits, when a subframe bundling is applied to the uplink data signal, ACK as the transmission acknowledgement information.

## Description

### TECHNICAL FIELD

The present invention relates to a radio base station and a mobile communication method.

### BACKGROUND ART

In this type of technology field, so-called a mobile communication scheme, which is the next generation of the 3rd generation, has been reviewed by 3GPP, which is a group aiming to standardize, employing a wideband code division multiple access (WCDMA) scheme.

Especially, the next generation of a WCDMA scheme, a high speed downlink packet access (HSDPA) scheme, a high speed uplink packet access (HSUPA) scheme and the like includes a long term evolution (LTE) scheme, an IMT-advanced scheme (which is the next-next generation) and the like.

In a system employing the LTE scheme and the like, one or more resource blocks (RBs) or resource units are assigned to a mobile station UE (User Equipment), so that downlink and uplink communication is performed.

The resource blocks are shared by a plurality of mobile stations UEs in the system. In the case of the LTE scheme, a radio base station eNB determines the number of mobile stations UE, to which the resource blocks are to be assigned, among the plurality of mobile stations UEs in each subframe (1 ms).

A subframe may also be called a transmission time interval (TTI). A process for determining the assignment of a radio resource is called scheduling. In the case of a downlink, the radio base station eNB transmits a downlink data signal to a mobile station UE selected through the scheduling via a shared channel of one or more resource blocks. The shared channel is called a physical downlink shared channel (PDSCH).

In the case of an uplink, the mobile station UE selected through the scheduling transmits an uplink data signal to the radio base station eNB via a shared channel of one or more resource blocks. The shared channel is called a physical uplink shared channel (PUTSCH).

In a communication system using the shared channel, it is necessary to perform signaling (notification) of a mobile station UE, to which the shared channel is to be assigned, in each subframe as a rule.

A control channel used in the signaling is called a physical downlink control channel (PDCCH) or a downlink L1/L2 control channel (DL-L1/L2 Control Channel).

A control channel in a downlink may include a physical control format indicator channel (PCFICH), a physical hybrid ARQ indicator channel (WHICH), and the like, in addition to the PDCCH.

For example, the following information may be transmitted as a downlink control signal via the PDCCH.

· Downlink Scheduling Information
· Uplink Scheduling Grant
· Transmission Power Control Command Bit (Transmission Power Control Bit)
The downlink scheduling information, for example, includes information on the PDSCH, specifically, resource blocks assignment information in the PDSCH, mobile station UE identification information (UE-ID), the number of streams, information on a pre-coding vector, a data size, a modulation scheme, information on HARQ (Hybrid Automatic Repeat reQuest), and the like.

Furthermore, the uplink scheduling grant, for example, includes information on the PUSCH, specifically, resource assignment information in the PUSCH, mobile station UE identification information (UE-ID), a data size, a modulation scheme, transmission power information, information on a demodulation reference signal in an uplink MIMO, and the like.

The PCFICH is a channel for notifying a format of the PDCCH. More specifically, the number of OFDM symbols, to which the PDCCH. is mapped, is notified through the PCFICH. In the LTE scheme, the number of OFDM symbols, to which the PDCCH is mapped, is 1, 2, or 3, and OFDM symbols are sequentially mapped from an OFDM symbol at the head of a subframe.

Transmission acknowledgement information (ACK/NACK: Acknowledgement/Non-Acknowledgement Information), which indicates whether to request the retransmission of an uplink data signal transmitted via the PUSCH, is transmitted via the PHICH.

In the case of an uplink, user data (an uplink data signal) and control information associated with the user data are transmitted via the PUSCH. Furthermore, separately from the PUSCH, an uplink control signal is transmitted via a physical uplink control channel.

The uplink control signal, for example, includes quality information (CQI: Channel Quality Indicator, PMI: Pre-coding Matrix Indicator, or RI: Rank Indicator) of a downlink, transmission acknowledgement information (ACK/NACK) of the PDSCH, and the like. The CQI is used for a scheduling process in the PDSCH, an adaptive modulation/demodulation and coding process (AMCS: Adaptive Modulation and Coding Scheme), and the like. In the uplink, a physical random access channel (PRACH), a signal (a Scheduling Request) indicating an assignment request of uplink and downlink radio resources, and the like are also transmitted as the occasion demands.

As described above, in the system employing the LTE scheme and the like, the communication of a mobile station UE is performed using one or more resource blocks. Signaling (notification) of a resource blocks to be used should be performed in each subframe as a rule. Even when the signaling is performed, a radio resource is required.

Since a radio resource used in the signaling imposes an overhead, it is preferable that the number of radio resources is small in terms of the use efficiency.

In this regard, in the LTE scheme, it has been determined in advance that a radio resource for retransmission of hybrid automatic repeat request (HARQ) in an uplink is shifted by a predetermined frequency for use in each predetermined time interval.

That is, uplink retransmission control is performed using a predetermined frequency hopping pattern based on a synchronous type ARQ scheme. The "synchronous type" represents a temporal timing of retransmission, and for example, is reached due to the arrival of each predetermined period as with each 8TTI.

In addition, the above-mentioned uplink retransmission control is realized when a radio base station eNB transmits NACK to a mobile station UE via the PHICH at a predetermined timing.

In the retransmission control through the NACK, as described above, the transmission of the uplink data signal via the PUSCH in a frequency resource determined in advance is performed. In such a case, for example, when the frequency resource for retransmission overlaps the frequency resource of the PREACH, since the uplink data signal transmitted via the PUSCH collides with a signal for random access transmitted via the PRACH, a communication quality of the both may be significantly degraded.

Therefore, when the above-mentioned problem occurs, the radio base station eNB may transmit an uplink scheduling grant to the mobile station UE at the timing at which the PHICH is transmitted, thereby changing the frequency resource of the PUSCH.

In this case, when the uplink scheduling grant has been received at the timing at which the PHICH is transmitted, the mobile station UE performs an operation for ignoring transmission acknowledgement information notified by the PHICH.

In this case, when the uplink scheduling grant has not been correctly received, since the mobile station UE regards that the uplink scheduling grant has not been transmitted, the mobile station UE determines whether to perform the retransmission of the PUSCH based on the transmission acknowledgement information notified by the PHICH.

That is, when the transmission acknowledgement information notified by the PHICH is NACK, the mobile station UE performs the retransmission of the PUSCH. When the transmission acknowledgement information notified by the PHICH is ACK, the mobile station UE does not perform the retransmission of the PUSCH.

In this regard, in the case of transmitting the uplink scheduling grant for changing the frequency resource of the above-mentioned PUSCH, it is preferable to transmit ACK as the transmission acknowledgement information notified by the PHICH, in order to reliably avoid a collision between the uplink data signal transmitted via the above-mentioned PUSCH and the signal for random access transmitted via the PRACH.

In addition, in relation to the above-mentioned collision, as well as the collision between the uplink data signal transmitted via the PUSCH and the signal for random access transmitted via the PRACH, there may occur a collision between the uplink data signal transmitted via the PUSCH and other channels such as a collision of the uplink data signal transmitted via the PUSCH or a collision with a message 3 signal in a random access procedure.

Meanwhile, one radio resource occupies one subframe (TTI) and a bandwidth (RB) of one or more resource blocks. The assignment of a radio resource to each mobile station UE is updated in each subframe, and the transmission and retransmission of a signal are also performed in each subframe as a rule. However, a signal corresponding to one subframe does not always cause an appropriate reception quality. For example, a signal quality from a mobile station UE having camped on a cell end may be lower than a signal quality from a mobile station UE in the vicinity of the radio base station eNB.

In order to cope with such a problem, there exists a technology called "Subframe Bundling" (which may also be called "TTI Bundling"). According to this technology, for example, a radio resource over a plurality of subframes (for example, four TTIs) is assigned to a specific mobile station UE at a time, thereby, for example, improving the signal quality from the mobile station UE having camped on the cell end. When the subframe bundling is applied, the transmission and retransmission of a signal from the mobile station UE are collectively performed at each of a plurality of subframes.

Meanwhile, differently from normal transmission, when the subframe bundling is applied, since a frequency resource in second and subsequent transmission of bundled subframes may not be changed by the uplink scheduling grant, it is probable that the frequency resource of the PRACH collides with the frequency resources of other channels as described above.

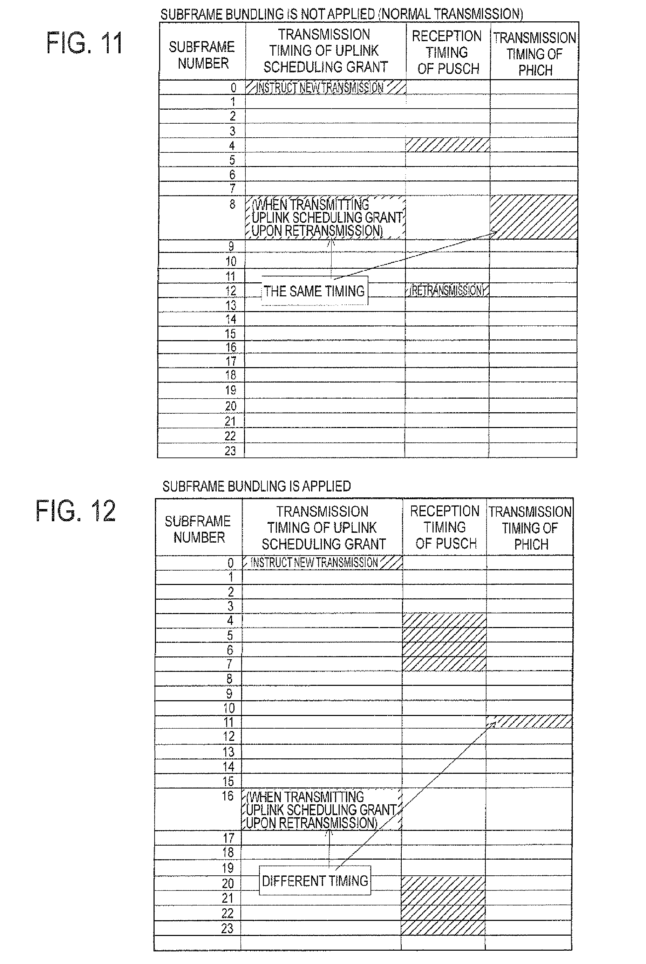

Furthermore, differently from normal transmission (refer to Fig. 11), in the case in which the subframe bundling is applied, as illustrated in Fig. 12, since the transmission timing of the transmission acknowledgement information via the PHICH to the mobile station UE is different from the transmission timing of the uplink scheduling grant, when the frequency resource of the PUSCH to be retransmitted and the frequency resource of the PREACH as described above collide with the frequency resources of other channels, it is difficult for the radio base station eNB to perform a process for changing the transmission acknowledgement information, which is transmitted via the PHICH, according to the presence or absence of the transmission of the uplink scheduling grant.

### SUMMARY OF THE INVENTION

Therefore, the present invention has been achieved in view of the above-described problems, and an object thereof is to provide a radio base station and a mobile communication method, by which it is possible to reduce the occurrence of a collision between frequency resources of a plurality of channels in a mobile communication system that performs HARQ and employs two or more subframe bundlings.

### MEANS FOR SOLVING THE PROBLEM

A first characteristic of the present invention is summarized as a radio base station comprising, a transmission format determination unit configured to determine a transmission format of a first uplink signal for which a synchronous automatic repeat request is performed, a frequency resource determination unit configured to determine a frequency resource of the first uplink signal, a transmission instruction unit configured to instruct new transmission and retransmission of the first uplink signal via a first downlink control channel, a reception unit configured to receive the first uplink signal; and a transmission acknowledgement information transmission unit configured to transmit transmission acknowledgement information on the first uplink signal via a second downlink control channel, in which when the first uplink signal is transmitted to be bundled with two or more time frames, the transmission acknowledgement information transmission unit is configured to always transmit ACK as the transmission acknowledgement information.

A second characteristic of the present invention is summarized as a mobile communication method, in which communication is performed between a mobile station and a radio base station by using a first uplink signal for which a synchronous automatic repeat request is performed, the mobile communication method comprising, a step A of determining a transmission format of the first uplink signal, a step B of determining a frequency resource of the first uplink signal, a step C of instructing new transmission and retransmission of the first uplink signal via a first downlink control channel, a step D of receiving the first uplink signal, and a step E of transmitting transmission acknowledgement information on the first uplink signal via a second downlink control channel, in which in the step E, when the first uplink signal is transmitted to be bundled with two or more time frames, ACK is always transmitted as the transmission acknowledgement information.

### BRIEF DESCRIPTION OF THE DRAWINGS

[Fig. 1] Fig. 1 is a diagram illustrating the entire configuration of a mobile communication system according to a first embodiment of the present invention.
[Fig. 2] Fig. 2 is a functional block diagram of a radio base station according to the first embodiment of the present invention.
[Fig. 3] Fig. 3 is a diagram explaining a method of transmitting transmission acknowledgement information in the mobile communication system according to the first embodiment of the present invention.
[Fig. 4] Fig. 4 is a diagram explaining the method of determining a transmission format and a frequency resource in the mobile communication system according to the first embodiment of the present invention.
[Fig. 5] Fig. 5 is a diagram explaining the method of determining a transmission format and a frequency resource in the mobile communication system according to the first embodiment of the present invention.
[Fig. 6] Fig. 6 is a diagram explaining the method of determining a transmission format and a frequency resource in the mobile communication system according to the first embodiment of the present invention.
[Fig. 7] Fig. 7 is a diagram explaining the method of determining a transmission format and a frequency resource in the mobile communication system according to the first embodiment of the present invention.
[Fig. 8] Fig. 8 is a flowchart illustrating an operation of the radio base station according to the first embodiment of the present invention.
[Fig. 9] Fig. 9 is a flowchart illustrating an operation of the radio base station according to the first embodiment of the present invention.
[Fig. 10] Fig. 10 is a flowchart illustrating an operation of the radio base station according to the first embodiment of the present invention.
[Fig. 11] Fig. 11 is a diagram explaining a method of transmitting transmission acknowledgement information in a conventional mobile communication system.
[Fig. 12] Fig. 12 is diagram explaining the method of transmitting transmission acknowledgement information in a conventional mobile communication system.

### BEST MODES FOR CARRYING OUT THE INVENTION

### (Configuration of mobile communication system according to first embodiment of the present invention)

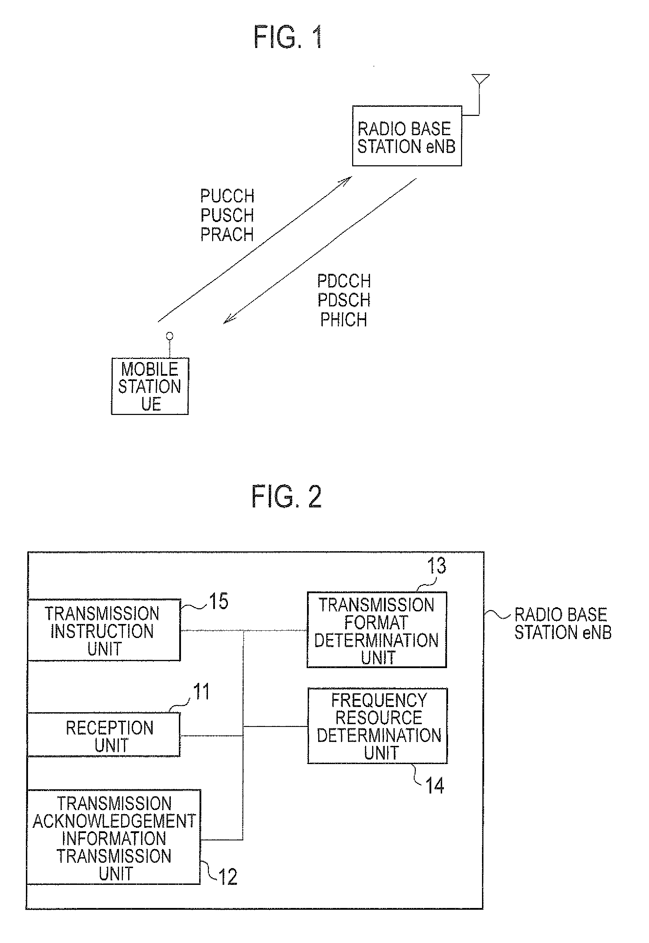

With reference to Fig. 1 to Fig. 7, the configuration of a mobile communication system according to a first embodiment of the present invention will be described.

The mobile communication system according to the present embodiment is an IMT-Advenced mobile communication system, and so configured that the above-mentioned subframe bundling can be applied.

As illustrated in Fig. 1, in the mobile communication system according to the present embodiment, a mobile station UE is configured to transmit an uplink data signal to a radio base station eNB via PUSCH, to transmit an uplink control signal to the radio base station eNB via PUCCH, and to transmit a signal for random access to the radio base station eNB via PRACH.

In addition, when the subframe bundling is applied, the mobile station UE is configured to transmit the uplink data signal (a first uplink signal) to be bundled with two or more subframes (TTIs, time frames).

Meanwhile, in the mobile communication system according to the present embodiment, the radio base station eNB is configured to transmit a downlink data signal to the mobile station UE via PDSCH, to transmit a downlink control signal to the mobile station UE via PDCCH, and to transmit transmission acknowledgement information (ACK/NACK) on the uplink data signal, which has been transmitted via the PUSCH, to the mobile station UE via PHICH.

Specifically, as illustrated in Fig. 2, the radio base station eNB includes a reception unit 11, a transmission acknowledgement information transmission unit 12, a transmission format determination unit 13, a frequency resource determination unit 14, and a transmission instruction unit 15.

The reception unit 11 is configured to receive the uplink data signal (the first uplink signal) via the PUSCH. Here, it is assumed that HARQ is performed on the uplink data signal.

Furthermore, when the subframe bundling is applied to the uplink data signal, that is, when the uplink data signal is transmitted to be bundled with two or more subframes (for example, four subframes), the reception unit 11 may be configured to perform a reception process at each of the bundled subframes, that is, a decoding process so as to perform determination (for example, CRC check) regarding whether the uplink data signal has been correctly received.

As a consequence, when only a decoding result at the last one of the bundled subframes is "NG." and a decoding result at remaining subframes is "OK", it is possible to appropriately perform decoding.

Hereinafter, the meaning that the reception unit 11 performs the decoding process at each of the bundled subframes will be described more specifically.

In general, in the reception when HARQ retransmission is performed, since a reception signal is synthesized each time the retransmission is performed, as the number of times of receptions is increased, a reception quality, for example, a reception SIR is improved. As a consequence, it is highly probable that a decoding result is OK.

That is, when the subframe bundling is applied, a reception quality of the bundled subframes becomes improved at a temporally-subsequent subframe. As a consequence, it is highly probable that a decoding result is OK.

Thus, in this case, it is not necessary to perform the decoding process at each of the bundled subframes, and it is sufficient if the decoding process, that is, a CRC check, is performed at the last subframe in the bundled subframes.

However, as described above, when the subframe bundling is performed, since a collision may occur between PREACH and other channels, the reception quality of the bundled subframes does not necessarily become improved at the temporally-subsequent subframe.

For example, when four subframes are bundled, if the above-mentioned collision occurs only in the fourth subframe, the quality of a synthesized reception signal at subframes up to three may be higher than the quality of a synthesized reception signal at subframes up to four.

In this case, when the CRC check is performed only at the fourth subframe in the bundled subframes, a CRC check result is NG. However, when the CRC check is performed at each of the bundled subframes, the CRC check result may be OK.

That is, the decoding process is performed at each of the bundled subframes, so that it is possible to reduce the degradation of characteristics due to the above-mentioned collision.

The transmission acknowledgement information transmission unit 12 is configured to transmit transmission acknowledgement information (ACK/NACK) of the uplink data signal (the first uplink signal) via PDCCH (a second downlink control channel).

Here, when the subframe bundling is applied to the uplink data signal, that is, when the uplink data signal is transmitted to be bundled with two or more subframes (for example, four subframes), the transmission acknowledgement information transmission unit 12 is configured to always transmit the ACK as the transmission acknowledgement information, regardless of a decoding result at each subframe.

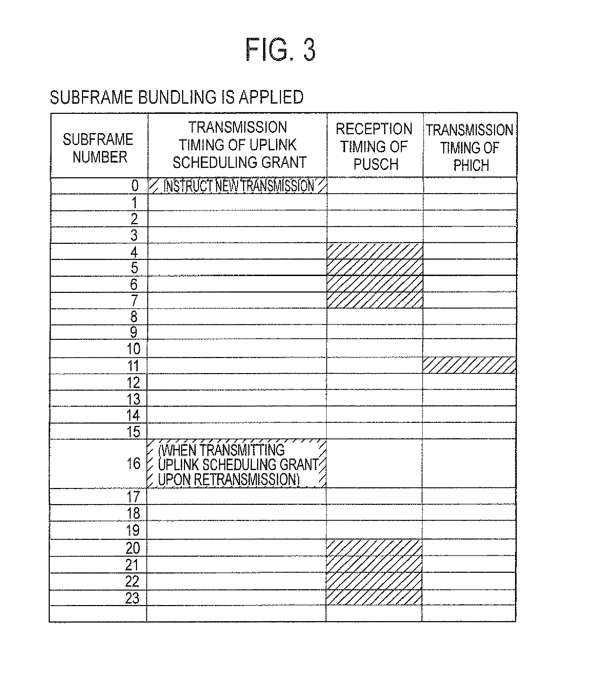

For example, as illustrated in Fig. 3, when the uplink data signal is transmitted to be bundled with subframes #4 to #7, the transmission acknowledgement information transmission unit 12 is configured to always transmit the ACK as the transmission acknowledgement information at subframe #11, regardless of the decoding result in the reception unit 11.

Hereinafter, the meaning that the transmission acknowledgement information transmission unit 12 always transmits the ACK as the transmission acknowledgement information, regardless of the decoding result in the reception unit 11, will be described more specifically.

As illustrated in Fig. 3 or Fig. 12, the transmission timing of PHICH is temporally earlier than the transmission timing of an uplink scheduling grant for retransmission.

Furthermore, the transmission timing of the uplink scheduling grant for retransmission is identical to the transmission timing of an uplink scheduling grant for the PUSCH of new transmission and retransmission when the subframe bundling is not applied.

In this case, whether the PUSCH of retransmission collides with other channels is determined not at the transmission timing of the PHICH, but at the transmission timing of the uplink scheduling grant.

That is, this means that at the transmission timing of the PHICH, it is not possible that the PUSCH of retransmission collides with other channels.

In this case, in the case in which the decoding result in the reception unit 11 is NG, since the transmission acknowledgement information transmission unit 12 transmits the NACK as transmission acknowledgement information to be mapped to the PHICH and a collision has occurred at the transmission timing of the uplink scheduling grant, when a process for transmitting an uplink scheduling grant for changing the frequency resource of the PUSCH of retransmission is performed, if the uplink scheduling grant for changing the frequency resource of the PUSCH of retransmission is not correctly decoded in the mobile station UE, a collision with other channels may occur.

Consequently, regardless of the decoding result in the reception unit 11, the ACK is transmitted as the transmission acknowledgement information mapped to the PHICH, so that it is possible to reliably avoid a collision with other channels.

The transmission format determination unit 13 is configured to determine the transmission format of the uplink data signal.

For example, the transmission format determination unit 13 may be configured to determine the transmission format of the uplink data signal such that an error rate when the subframe bundling is applied to the uplink data signal is lower than an error rate when the subframe bundling has not been applied to the uplink data signal (when the uplink data signal is transmitted at one subframe, that is, in the case of normal transmission).

Here, the error rate is not an error rate at one subframe among bundled subframes, but an error rate when all bundled subframes have been received using HARQ synthetic reception.

More specifically, when the error rate when the subframe bundling has not been applied is 10%, the transmission format determination unit 13 may be configured to determine the transmission format of the uplink data signal such that the error rate when the subframe bundling is applied is 1%.

In addition, the 1% is for illustrative purposes only, and may also be 0.5% or 0.1%. Furthermore, the error rate may be determined in each logical channel, each logical channel priority, each bearer, or each service type. For example, the service type may include VoIP, Web Browsing, Streaming, Best effort communication services, and the like.

Hereinafter, the meaning that the transmission format determination unit 13 allows the error rate when the subframe bundling is applied to be lower than the error rate when the subframe bundling has not been applied will be described more specifically.

As described above, when the subframe bundling is applied, a collision with other channels significantly degrades the transmission characteristics of the PUSCH and other channels.

Consequently, the error rate when the subframe bundling is applied is decreased, so that it is possible to reduce the retransmission probability of the bundled subframes, resulting in the reduction of the probability of the above-mentioned collision.

That is, the error rate when the subframe bundling is applied is made smaller than the error rate when the subframe bundling has not been applied, so that it is possible to avoid the characteristic degradation due to the above-mentioned collision.

In addition, in the above-mentioned example, the error rate is defined as the error rate when all the bundled subframes are received using the HARQ synthetic reception, instead of the error rate at one subframe among the bundled subframes. Alternatively, the error rate may also be defined as the error rate at one subframe among the bundled subframes.

At this time, the transmission format determination unit 13 may also determine the transmission format of the uplink data signal such that the error rate when the subframe bundling is applied to the uplink data signal is higher than the error rate when the subframe bundling has not been applied to the uplink data signal.

In this case, in relation to the error rate when all the bundled subframes are received using the HARQ synthetic reception, the error rate at one subframe among the bundled subframes may also be set such that the error rate when the subframe bundling is applied to the uplink data signal is lower than the error rate when the subframe bundling has not been applied to the uplink data signal.

Otherwise, the transmission format determination unit 13 may also be configured to determine the transmission format of the uplink data signal such that a coding rate when the subframe bundling is applied to the uplink data signal is lower than a coding rate when the subframe bundling has not been applied to the uplink data signal.

Here, the coding rate is not a coding rate at one subframe among the bundled subframes, but a coding rate when all the bundled subframes are received using HARQ synthetic reception.

More specifically, the transmission format determination unit 13 may be configured to determine the transmission format of the uplink data signal such that when the coding rate when the subframe bundling has not been applied is 1/3, the coding rate when the subframe bundling is applied is 1/6.

In addition, the 1/6 is for illustrative purposes only, and may also be 1/8 or 1/9. Furthermore, the coding rate may be determined in each logical channel, each logical channel priority, each bearer, or each service type. For example, the service type may include VoIP, Web Browsing, Streaming, Best effort communication services, and the like.

Hereinafter, the meaning that the transmission format determination unit 13 allows the coding rate when the subframe bundling is applied to be lower than the coding rate when the subframe bundling has not been applied will be described more specifically.

As described above, when the subframe bundling is applied, a collision with other channels significantly degrades the transmission characteristics of the PUSCH and other channels.

Consequently, the coding rate when the subframe bundling is applied is decreased, so that it is possible to lower an error rate, thereby reducing the retransmission probability of the bundled subframes, resulting in the reduction of the probability of the above-mentioned collision.

That is, the coding rate when the subframe bundling is applied is made smaller than the coding rate when the subframe bundling has not been applied, so that it is possible to avoid the characteristic degradation due to the above-mentioned collision.

In addition, in the above-mentioned example, the coding rate is defined as the coding rate when all the bundled subframes are received using the HARQ synthetic reception, instead of the coding rate at one subframe among the bundled subframes. Alternatively, the coding rate may also be defined as the coding rate at one subframe among the bundled subframes.

At this time, the transmission format determination unit 13 may also determine the transmission format of the uplink data signal such that the coding rate when the subframe bundling is applied to the uplink data signal is higher than the coding rate when the subframe bundling has not been applied to the uplink data signal.

In this case, in relation to the coding rate when all the bundled subframes are received using the HARQ synthetic reception, the coding rate at one subframe among the bundled subframes may also be set such that the coding rate when the subframe bundling is applied to the uplink data signal is lower than the coding rate when the subframe bundling has not been applied to the uplink data signal.

The frequency resource determination unit 14 is configured to determine the frequency resource of the uplink data signal.

Here, when the subframe bundling is applied to the uplink data signal, the frequency resource determination unit 14, the frequency resource determination unit 14 may be configured to determine the frequency resource of a first uplink signal such that the frequency resource of the uplink data signal transmitted via the PUSCH does not collide with the frequency resource of a signal for random access transmitted via the PEACH or the frequency resource of an uplink control signal transmitted via the PUCCH at a first subframe and second and subsequent subframes in the bundled subframes.

Furthermore, when the subframe bundling is applied to the uplink data signal, the frequency resource determination unit 14 may be configured to determine the frequency resource of the uplink data signal such that the frequency resource of the uplink data signal does not collide with the frequency resource for initial transmission and retransmission of a second uplink signal (for example, an uplink signal to which a radio resource is assigned by semi-persistent scheduling, or a message 3 in a random access procedure) at a first subframe in the bundled subframes, and may also be configured to determine the frequency resource of the uplink data signal such that the frequency resource of the uplink data signal does not collide with the frequency resource for initial transmission of the second uplink signal at the second and subsequent subframes in the bundled subframes.

Hereinafter, there will be provided a description about the meaning that the frequency resource of the uplink signal is determined such that the frequency resource of the uplink data signal does not collide with the frequency resource for the initial transmission and retransmission of the second uplink signal at the first subframe in the bundled subframes, and the frequency resource of the uplink data signal is determined such that the frequency resource of the uplink data signal does not collide with the frequency resource for the initial transmission of the second uplink signal at the second and subsequent subframes in the bundled subframes.

In general, in relation to the first subframe, the assignment of a frequency resource for retransmission of an uplink signal to which a radio resource is assigned by the semi-persistent scheduling, and the assignment of a frequency resource for retransmission of a message 3 are performed at the same timing.

In this case, in order to avoid a collision with the frequency resource for retransmission, it is possible to determine the frequency resource of the uplink data signal. Meanwhile, at the second and subsequent subframes, since the assignment of the frequency resource for retransmission of the uplink signal to which the radio resource is assigned by the semi-persistent scheduling, and the assignment of the frequency resource for retransmission of the message 3 are not still performed, it is difficult to determine the frequency resource of the uplink data signal in order to avoid a collision with these frequency resources for retransmission.

In addition, even at the second and subsequent subframes, when the assignment of the frequency resource for retransmission of the uplink signal to which the radio resource is assigned by the semi-persistent scheduling, and the assignment of the frequency resource for retransmission of the message 3 are already performed, the frequency resource determination unit 14 may also determine the frequency resource of the uplink data signal in order to avoid a collision with these frequency resources for retransmission.

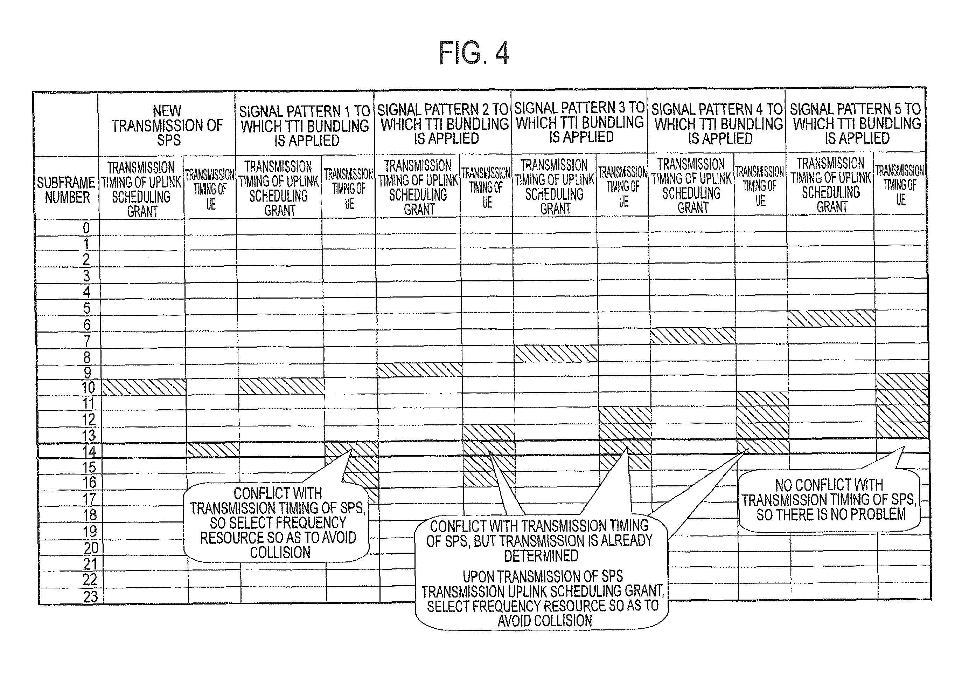

For example, when the subframe bundling is applied to the uplink data signal, in a signal pattern 1 illustrated in Fig. 4, since the initial transmission (new transmission) timing of an uplink signal (hereinafter, referred to as SPS) to which a radio resource is assigned by the semi-persistent scheduling collides with the transmission timing of the uplink data signal at the subframe #14, the frequency resource determination unit 14 selects the frequency resource of the uplink data signal at the subframe #10 so as to avoid a collision with the frequency resource of the SPS.

Furthermore, when the subframe bundling is applied to the uplink data signal, in signal patterns 2 to 4 illustrated in Fig. 4, since the initial transmission timing of the SPS collides with the transmission timing of the uplink data signal at the subframe #14. However, an uplink scheduling grant for the uplink data signal has been already transmitted (subframes #7 to #9), the frequency resource determination unit 14 selects the frequency resource of the SPS at the subframe #10 so as to avoid a collision with the frequency resource of the uplink data signal.

In addition, in a signal pattern 5 illustrated in Fig. 4, since the initial transmission timing of the SPS does not collide with the transmission timing of the uplink data signal, it is not necessary for the frequency resource determination unit 14 to select a frequency resource in order to avoid the above-mentioned collision.

In addition, in general, the frequency resource of the initial transmission of the SPS has been semi-fixedly assigned. Therefore, at the transmission timing of uplink scheduling grants for the uplink data signals with the signal patterns 2 to 4 illustrated in Fig. 4, the frequency resource of initial transmission of the SPS may be determined.

In this case, in order to avoid a collision with the frequency resources of the uplink data signals with the signal patterns 2 to 4 illustrated in Fig. 4, the frequency resource determination unit 14 may also select the frequency resource of the uplink data signal, instead of the frequency resource of the SPS, such that the frequency resources at second and subsequent subframes of the uplink data signals with the signal patterns 2 to 4 illustrated in Fig. 4 do not collide with the frequency resource of the initial transmission of the SPS.

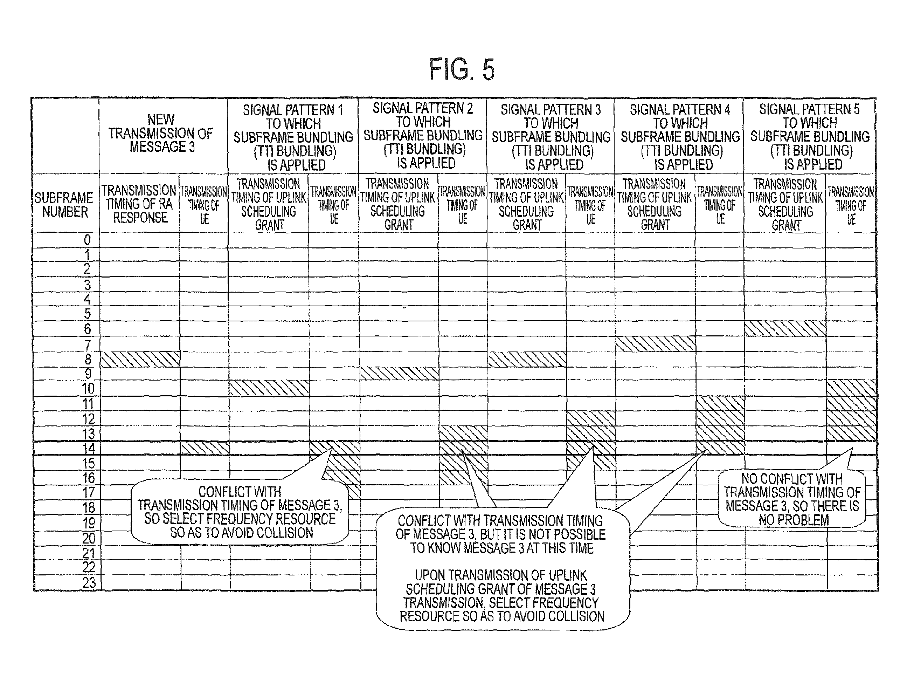

For example, when the subframe bundling is applied to the uplink data signal, in signal patterns 1 to 3 illustrated in Fig. 5, since the initial transmission timing of the message 3 collides with the transmission timing of the uplink data signal at the subframe #14, the frequency resource determination unit 14 selects the frequency resource of the uplink data signal at the subframes #8 to #10 so as to avoid a collision with the frequency resource of the message 3.

Furthermore, when the subframe bundling is applied to the uplink data signal, in a signal pattern 4 illustrated in Fig. 5, since the initial transmission timing of the message 3 collides with the transmission timing of the uplink data signal at the subframe #14. However, an uplink scheduling grant for the uplink data signal has been already transmitted (subframe #7), the frequency resource determination unit 14 selects the frequency resource of the message 3 at the subframe #8 so as to avoid a collision with the frequency resource of the uplink data signal.

In addition, in a signal pattern 5 illustrated in Fig. 5, since the initial transmission timing of the message 3 does not collide with the transmission timing of the uplink data signal, it is not necessary for the frequency resource determination unit 14 to select a frequency resource in order to avoid the above-mentioned collision.

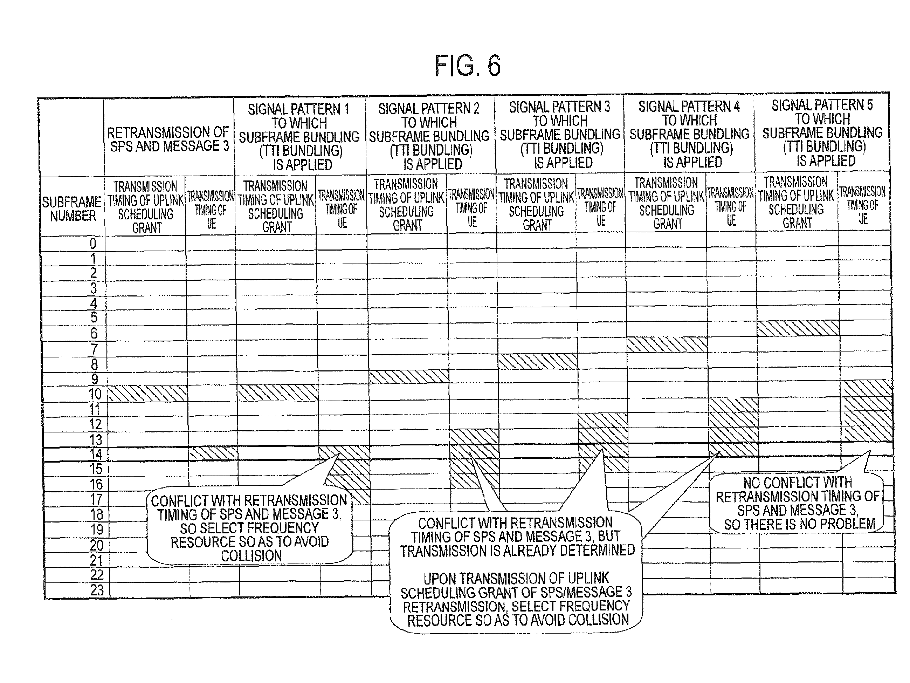

For example, when the subframe bundling is applied to the uplink data signal, in a signal pattern 1 illustrated in Fig. 6, since the retransmission timings of the SPS and the message 3 collide with the transmission timing of the uplink data signal at the subframe #14, the frequency resource determination unit 14 selects the frequency resource of the uplink data signal at the subframe #10 so as to avoid a collision with the frequency resources for retransmission of the SPS and the message 3.

In addition, in the above process, it is assumed that the priority of the uplink data signal is lower than those of the SPS and the message 3.

When the priority of the uplink data signal is higher than those of the SPS and the message 3, the frequency resource determination unit 14 may also select the frequency resources for retransmission of the SPS and the message 3 so as to avoid a collision with the frequency resource of the uplink data signal.

Furthermore, when the subframe bundling is applied to the uplink data signal, in signal patterns 2 to 4 illustrated in Fig. 6, the retransmission timings of the SPS and the message 3 collide with the transmission timing of the uplink data signal at the subframe #14. However, since an uplink, scheduling grant for the uplink data signal has been already transmitted (subframes #7 to #9), the frequency resource determination unit 14 selects the frequency resource for the retransmission of the SPS and the message 3 at the subframe #10 so as to avoid a collision with the frequency resource of the uplink data signal.

In addition, in a signal pattern 5 illustrated in Fig. 6, since the retransmission timings of the SPS and the message 3 do not collide with the transmission timing of the uplink data signal, it is not necessary for the frequency resource determination unit 14 to select a frequency resource in order to avoid the above-mentioned collision.

Furthermore, when the subframe bundling is applied to the uplink data signal, the frequency resource determination unit 14 may also be configured to determine the frequency resource of the uplink data signal such that the frequency resource of an uplink data signal does not collide with the frequency resources at second and subsequent subframes of other uplink data signals, which are bundled with two or more subframes and are transmitted, at the first subframe and second and subsequent subframes in the bundled subframes.

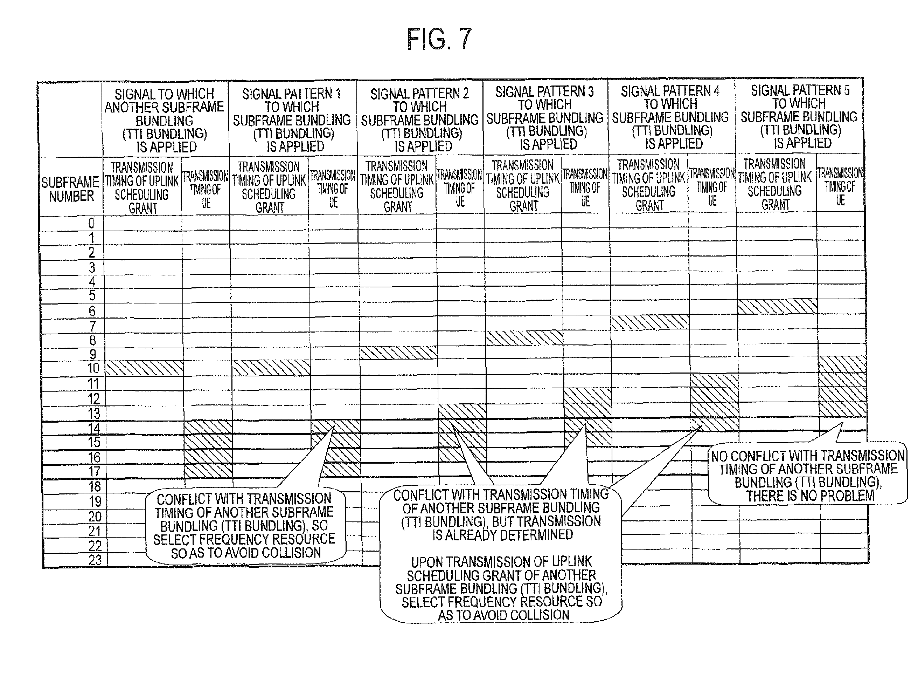

For example, when the subframe bundling is applied to the uplink data signal, in a signal pattern 1 illustrated in Fig. 7, since the initial transmission timing of an uplink data signal (hereinafter, referred to as another uplink data signal) employing another subframe bundling collides with the transmission timing of the uplink data signal at the subframes #14 to #17, the frequency resource determination unit 14 selects the frequency resource of the uplink data signal at the subframe #10 so as to avoid a collision with the frequency resource of the other uplink data signal.

In addition, in the above process, it is assumed that the priority of the uplink data signal is lower than that of the other uplink data signal.

When the priority of the uplink data signal is higher than that of the other uplink data signal, the frequency resource determination unit 14 may also select the frequency resource of the other uplink data signal so as to avoid a collision with the frequency resource of the uplink data signal.

Furthermore, when the subframe bundling is applied to the uplink data signal, in signal patterns 2 to 4 illustrated in Fig. 7, the initial transmission timing of the other uplink data signal collides with the transmission timing of the uplink data signal at the subframes #14 to #16. However, since an uplink scheduling grant for the uplink data signal has been already transmitted (subframes #7 to #9), the frequency resource determination unit 14 selects the frequency resource of the other uplink data signal at the subframe #10 so as to avoid a collision with the frequency resource of the uplink data signal.

That is, in Fig. 7, when determining the frequency resource of a signal employing another TTI bundling (that is, subframe bundling), the frequency resource determination unit 14 determines the frequency resource of the signal employing the other TTI bundling so as to avoid a collision with the frequency resources at second and subsequent subframes of the uplink data signals with the signal patterns 2 to 4 illustrated in Fig. 7.

The process can also be applied even when a relation between the signal employing the other TTI bundling and the uplink data signals with the signal patterns 2 to 4 has been exchanged.

In addition, in a signal pattern 5 illustrated in Fig. 7, since the initial transmission timing of the other uplink data signal does not collide with the transmission timing of the uplink data signal, it is not necessary for the frequency resource determination unit 14 to select a frequency resource in order to avoid the collision mentioned above.

### (Operation of mobile communication system according to first embodiment of the present invention)

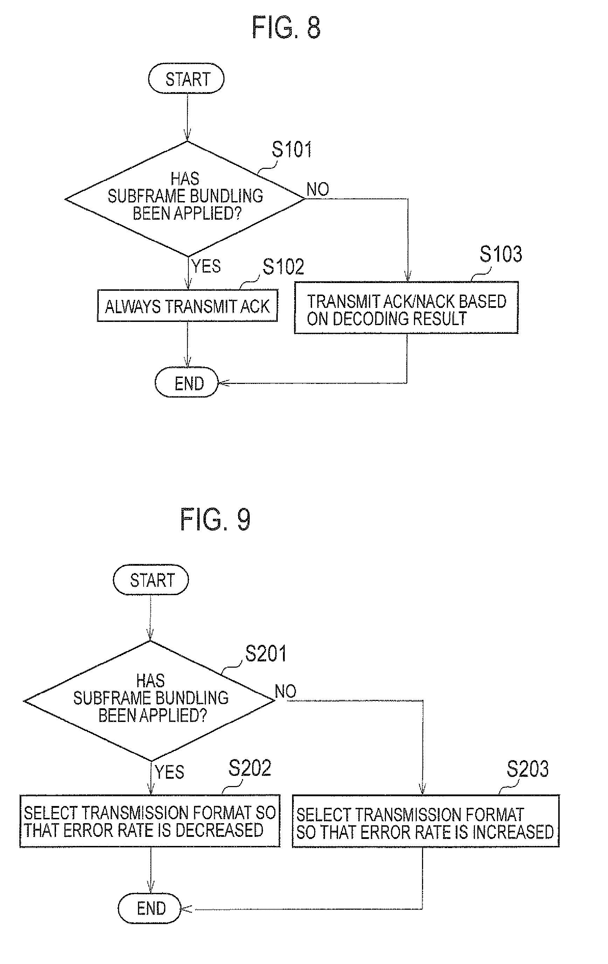

With reference to Fig. 8 to Fig. 10, the operation of the mobile communication system according to the first embodiment of the present invention, specifically, the operation of the radio base station eNB according to the first embodiment of the present invention will be described.

Firstly, as illustrated in Fig. 8, in step S101, the radio base station eNB determines whether subframe bundling is applied. When it is determined that the subframe bundling is applied, the operation proceeds to step S102. When it is determined that the subframe bundling has not been applied, the operation proceeds to step S103.

In step S102, the radio base station eNB always transmits ACK as transmission acknowledgement information to be mapped to the PHICH, regardless of a decoding result of an uplink data signal at bundled subframes.

In step S103, the radio base station eNB transmits transmission acknowledgement information based on the decoding result of the uplink data signal at a corresponding subframe.

Secondly, as illustrated in Fig. 9, in step S201, the radio base station eNB determines whether subframe bundling is applied. When it is determined that the subframe bundling is applied, the operation proceeds to step S202. When it is determined that the subframe bundling has not been applied, the operation proceeds to step S203.

In step S202, the radio base station eNB determines a transmission format of an uplink data signal such that an error rate is lower than an error rate when the subframe bundling has not been applied to the uplink data signal.

In step S203, the radio base station eNB determines the transmission format of the uplink data signal such that an error rate is higher than an error rate when the subframe bundling is applied to the uplink data signal.

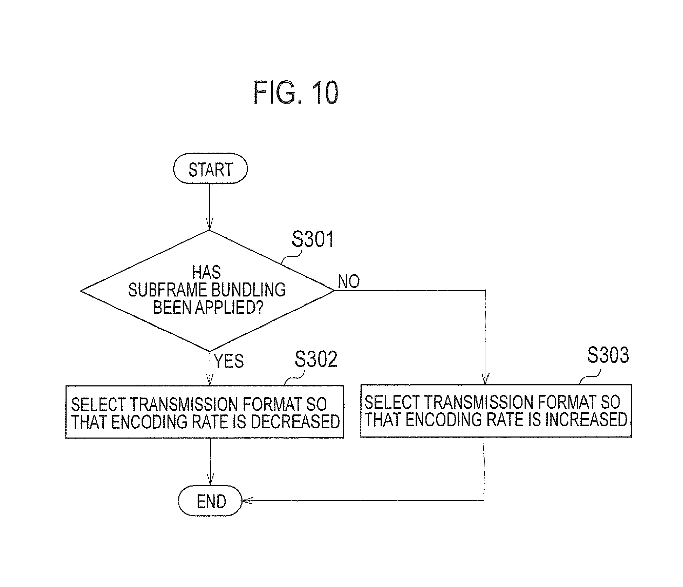

Thirdly, as illustrated in Fig. 10, in step S301, the radio base station eNB determines whether subframe bundling is applied. When it is determined that the subframe bundling is applied, the operation proceeds to step S302. When it is determined that the subframe bundling has not been applied, the operation proceeds to step S303.

In step S302, the radio base station eNB determines a transmission format of an uplink data signal such that a coding rate is lower than a coding rate when the subframe bundling has not been applied to the uplink data signal.

In step S303, the radio base station eNB determines the transmission format of the uplink data signal such that a coding rate is higher than a coding rate when the subframe bundling is applied to the uplink data signal.

### (Operation and effect of mobile communication system according to first embodiment of present invention)

In accordance with the mobile communication system according to the first embodiment of the present invention, in a mobile communication system that performs an HARQ and employs two or more subframe bundlings, it is possible to reduce the occurrence of a collision between frequency resources of a plurality of channels.

The above-mentioned characteristics of the present embodiment may be expressed as follows.

A first characteristic of the present embodiment is summarized in that a radio base station eNB includes: a transmission format determination unit 13 configured to determine a transmission format of an uplink data signal (a first uplink signal) for which HARQ (a synchronous automatic repeat request) is performed; a frequency resource determination unit 14 configured to determine a frequency resource of the uplink data signal; a transmission instruction unit 15 configured to instruct the new transmission and retransmission of the uplink data signal via PDCCH (a first downlink control channel); a reception unit 11 configured to receive the uplink data signal; and a transmission acknowledgement information transmission unit 12 configured to transmit transmission acknowledgement information on the uplink data signal via PHICH (a second downlink control channel), wherein when subframe bundling is applied to the uplink data signal (when the uplink data signal is transmitted to be bundled with two or more subframes (time frames)), the transmission acknowledgement information transmission unit 12 is configured to always transmit ACK as the transmission acknowledgement information.

In the first characteristic of the present embodiment, the transmission format determination unit 13 may be configured to determine the transmission format of the uplink data signal such that an error rate when the subframe bundling is applied to the uplink data signal is lower than an error rate when the subframe bundling has not been applied to the uplink data signal (when the uplink data signal is transmitted at one subframe).

In the first characteristic of the present embodiment, the transmission format determination unit 13 may be configured to determine the transmission format of the uplink data signal such that a coding rate when the subframe bundling is applied to the uplink data signal is lower than a coding rate when the subframe bundling has not been applied to the uplink data signal.

In the first characteristic of the present embodiment, when the subframe bundling is applied to the uplink data signal, the frequency resource determination unit 14 may be configured to determine the frequency resource of the uplink data signal such that the frequency resource of the uplink data signal does not collide with a frequency resource for a signal for random access or a frequency resource for an uplink control signal at a first subframe and second and subsequent subframes in bundled subframes.

In the first characteristic of the present embodiment, when the subframe bundling is applied to the uplink data signal, the frequency resource determination unit 14 may be configured to determine the frequency resource of the uplink data signal such that the frequency resource of the uplink data signal does not collide with a frequency resource for the initial transmission and retransmission of a second uplink signal at a first subframe in bundled subframes, and to determine the frequency resource of the uplink data signal such that the frequency resource of the uplink data signal does not collide with a frequency resource for the initial transmission of the second uplink signal at second and subsequent subframes in the bundled subframes.

In the first characteristic of the present embodiment, the second uplink signal may include an uplink signal to which a radio resource is assigned by semi-persistent scheduling, or a message 3 in a random access procedure.

In the first characteristic of the present embodiment, when the subframe bundling is applied to the uplink data signal, the frequency resource determination unit 14 may be configured to determine the frequency resource of the uplink data signal such that the frequency resource of the uplink data signal does not collide with a frequency resource at second and subsequent subframes of another uplink data signal, which is transmitted to be bundled with two or more subframes, at a first subframe and second and subsequent subframes in bundled subframes.

In the first characteristic of the present embodiment, when the subframe bundling is applied to the uplink data signal, the reception unit 11 may be configured to perform a reception process at each of bundled subframes and determine whether to correctly receive the uplink data signal.

The second characteristic of the present embodiment is summarized in that a mobile communication method, in which communication is performed between a mobile station UE and a radio base station eNB by using an uplink data signal for which HARQ is performed, includes: a step A of determining a transmission format of the uplink data signal; a step B of determining a frequency resource of the uplink data signal; a step C of instructing the new transmission and retransmission of the uplink data signal via PDCCH; a step D of receiving the uplink data signal; and a step E of transmitting transmission acknowledgement information on the uplink data signal via PHICH, wherein in step E, when the uplink data signal is transmitted to be bundled with two or more time frames, ACK is always transmitted as the transmission acknowledgement information.

It is noted that the operation of the above-described the radio base station eNB or the mobile station UE may be implemented by a hardware, may also be implemented by a software module executed by a processor, and may further be implemented by the combination of the both.

The software module may be arranged in a storage medium of an arbitrary format such as RAM(Random Access Memory), a flash memory, ROM (Read Only Memory), EPROM (Erasable Programmable ROM), EEPROM (Electronically Erasable and Programmable ROM), a register, a hard disk, a removable disk, and CD-ROM.

The storage medium is connected to the processor so that the processor can write and read information into and from the storage medium. Such a storage medium may also be accumulated in the processor. The storage medium and processor may be arranged in ASIC. Such the ASIC may be arranged in the radio base station eNB or the mobile station UE. Further, such a storage medium or a processor may be arranged, as a discrete component, in the radio base station eNB or the mobile station UE.

Thus, the present invention has been explained in detail by using the above-described embodiments; however, it is obvious that for persons skilled in the art, the present invention is not limited to the embodiments explained herein. The present invention can be implemented as a corrected and modified mode without departing from the gist and the scope of the present invention defined by the claims. Therefore, the description of the specification is intended for explaining the example only and does not impose any limited meaning to the present invention.

### Industrial Applicability

As described above, according to the present invention, in a mobile communication system that performs HARQ and employs two or more subframe bundlings, it is possible to provide a radio base station and a mobile communication method, by which it is possible to reduce the occurrence of a collision between frequency resources of a plurality of channels.

## Claims

1. A radio base station comprising:
a transmission format determination unit configured to determine a transmission format of a first uplink signal for which a synchronous automatic repeat request is performed;
a frequency resource determination unit configured to determine a frequency resource of the first uplink signal;
a transmission instruction unit configured to instruct new transmission and retransmission of the first uplink signal via a first downlink control channel;
a reception unit configured to receive the first uplink signal; and
a transmission acknowledgement information transmission unit configured to transmit transmission acknowledgement information on the first uplink signal via a second downlink control channel, wherein
when the first uplink signal is transmitted to be bundled with two or more time frames, the transmission acknowledgement information transmission unit is configured to always transmit ACK as the transmission acknowledgement information.

2. The radio base station according to claim 1, wherein
the transmission format determination unit is configured to determine the transmission format of the first uplink signal such that an error rate when the first uplink signal is transmitted to be bundled with two or more time frames is lower than an error rate when the first uplink signal is transmitted at one time frame.

3. The radio base station according to claim 1 or 2, wherein
the transmission format determination unit is configured to determine the transmission format of the first uplink signal such that a coding rate when the first uplink signal is transmitted to be bundled with two or more time frames is lower than a coding rate when the first uplink signal is transmitted at one time frame.

4. The radio base station according to claim 1, wherein
when the first uplink signal is transmitted to be bundled with two or more time frames, the frequency resource determination unit is configured to determine the frequency resource of the first uplink signal such that the frequency resource of the first uplink signal does not collide with a frequency resource for a signal for random access or a frequency resource for an uplink control signal at a first time frame and second and subsequent time frames in bundled time frames.

5. The radio base station according to claim 1, wherein
when the first uplink signal is transmitted to be bundled with two or more time frames, the frequency resource determination unit is configured to determine the frequency resource of the uplink signal such that the frequency resource of the first uplink signal does not collide with a frequency resource for initial transmission and retransmission of a second uplink signal at a first time frame in bundled time frames, and determine the frequency resource of the first uplink signal such that the frequency resource of the first uplink signal does not collide with a frequency resource for the initial transmission of the second uplink signal at second and subsequent time frames in the bundled time frames.

6. The radio base station according to claim 5, wherein the second uplink signal includes an uplink signal to which a radio resource is assigned by semi-persistent scheduling, or a message 3 in a random access procedure.

7. The radio base station according to claim 1, wherein
when the first uplink signal is transmitted to be bundled with two or more time frames, the frequency resource determination unit is configured to determine the frequency resource of the first uplink signal such that the frequency resource of the first uplink signal does not collide with a frequency resource at second and subsequent time frames of other first uplink signal, which is transmitted to be bundled with two or more time frames, at a first time frame and second and subsequent time frames in bundled time frames.

8. The radio base station according to claim 1, wherein, when the first uplink signal is transmitted to be bundled with two or more time frames, the reception unit is configured to perform a reception process at each of bundled time frames and determine whether to correctly receive the first uplink signal.

9. A mobile communication method, in which communication is performed between a mobile station and a radio base station by using a first uplink signal for which a synchronous automatic repeat request is performed, the mobile communication method comprising:
a step A of determining a transmission format of the first uplink signal;
a step B of determining a frequency resource of the first uplink signal;
a step C of instructing new transmission and retransmission of the first uplink signal via a first downlink control channel;
a step D of receiving the first uplink signal; and
a step E of transmitting transmission acknowledgement information on the first uplink signal via a second downlink control channel, wherein
in the step E, when the first uplink signal is transmitted to be bundled with two or more time frames, ACK is always transmitted as the transmission acknowledgement information.
